# DEMANDE DE BREVET EUROPEEN

(11) **EP 2 181 833 A1**
(43) Date de publication de la demande: **05.05.2010**
(21) Numéro de dépôt: 09174423.5
(22) Date de dépôt: 29.10.2009
(51) Int. Cl.: B29C 47/12, B29C 47/20, B29C 47/26

(54) **Procédé et dispositif d'extrusion simultanée de deux tubes en matériau synthétique**

(30) Priorité: 30.10.2008 FR 0857389
(71) Demandeur: Corelco SAS, 01570 Manziat (FR)
(72) Inventeur: Courant, Alain, 01190 Chavannes sur Reyssouze (FR)
(74) Mandataire: Tetaz, Franck Claude Edouard

(57) **Abrégé**

La présente invention concerne un dispositif de fabrication simultanée de deux tubes en matériau synthétique, comprenant deux filières (12a, 12b) d'extrusion pour former deux paraisons parallèles, caractérisé en ce qu'il comprend des moyens pour former un lien discontinu dans ledit matériau entre les deux paraisons, lesdits moyens comprenant un passage (5) apte à mettre en liaison fluidique les deux filières (12a, 12b) et une tige d'obturation (40) mobile en translation dans un alésage (3) selon la direction (X) d'extrusion et apte à fermer ou ouvrir ledit passage (5).

## Description

### DOMAINE DE L'INVENTION

La présente invention concerne un dispositif et un procédé de fabrication simultanée de deux tubes extrudés en matériau synthétique.

### ARRIERE PLAN DE L'INVENTION

Lors de la fabrication simultanée de deux gaines annelées, il peut être souhaitable de les attacher par un lien sécable.

De telles gaines trouvent notamment application sur le marché des gaines pré-tubées pour des circuits d'eau chaude et d'eau froide.

Grâce au lien sécable, la manipulation des gaines est aisée, mais l'opérateur peut, selon les contraintes liées à leur mise en place, les séparer lorsque leurs parcours divergent.

L'un des buts de l'invention est donc de concevoir un dispositif permettant de former, de manière simple et peu onéreuse, un tel lien entre deux gaines annelées extrudées simultanément. Ce dispositif doit par ailleurs être compatible avec l'environnement de production, et notamment, dans le cas des gaines pré-tubées, ne pas interférer avec les tubes insérés. Le lien ainsi formé doit être sécable manuellement.

### BREVE DESCRIPTION DE L'INVENTION

Conformément à l'invention, il est proposé un dispositif de fabrication simultanée de deux tubes en matériau synthétique, comprenant deux filières d'extrusion pour former deux paraisons parallèles, ledit dispositif comprenant des moyens pour former un lien discontinu dans ledit matériau entre les deux paraisons.

De manière particulièrement avantageuse, lesdits moyens comprennent un passage apte à mettre en liaison fluidique les deux filières.

Lesdits moyens comprennent en outre une tige d'obturation mobile en translation dans un alésage selon la direction d'extrusion et apte à fermer ou ouvrir ledit passage.

De préférence, ledit passage est une fente longitudinale rectangulaire reliant l'alésage dans lequel coulisse la tige et chacune des deux filières.

Selon un mode préféré de réalisation, la tige d'obturation est actionnée par un vérin.

Un autre objet de l'invention concerne un procédé de fabrication simultanée de deux tubes en matériau synthétique, par extrusion dans deux filières de deux paraisons parallèles, ledit procédé étant **caractérisé en ce qu**'il comprend, à des instants déterminés, la génération d'une fuite de matériau entre les deux paraisons.

De manière avantageuse, ledit procédé comprend l'actionnement, dans le dispositif d'extrusion, d'une tige d'obturation mobile en translation selon la direction d'extrusion, de sorte que :
- dans une première position, ladite tige obture un passage de mise en communication fluidique des deux filières, empêchant ainsi toute fuite de matériau entre les deux paraisons,
- dans une deuxième position, ladite tige libère ledit passage, permettant ainsi ladite fuite de matériau entre les deux paraisons.

L'actionnement de la tige est effectué de préférence au moyen d'un vérin.

### BREVE DESCRIPTION DES DESSINS

D'autres caractéristiques et avantages de l'invention ressortiront de la description détaillée qui va suivre, en référence aux dessins annexés sur lesquels :
- la figure 1 est une vue de face du dispositif,
- la figure 2 représente un éclaté de l'épi et de l'embout appartenant à la tête d'extrusion,
- la figure 3 est une section de la tête d'extrusion,
- la figure 4 est une section de l'ensemble du dispositif conforme à l'invention.

### DESCRIPTION DETAILLEE DE L'INVENTION

La structure générale d'une extrudeuse est connue en elle-même et ne sera donc décrite que dans ses grandes lignes.

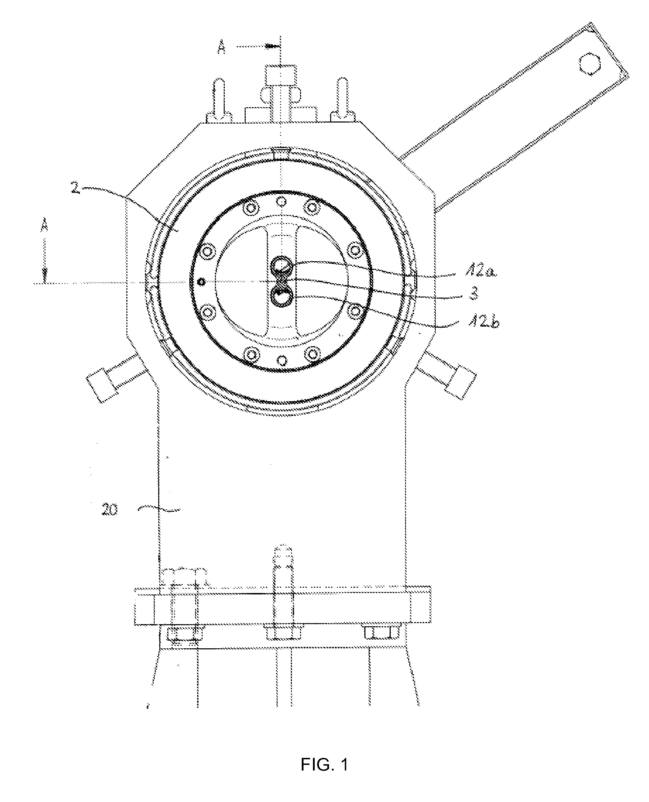

En référence à la figure 1, l'extrudeuse comprend un corps principal 2, monté sur un bâti 20.

Une tête d'extrusion 1 comprenant deux filières 12a et 12b pour former deux paraisons est raccordée au corps principal 2 par des moyens connus en soi, tels que des goupilles par exemple.

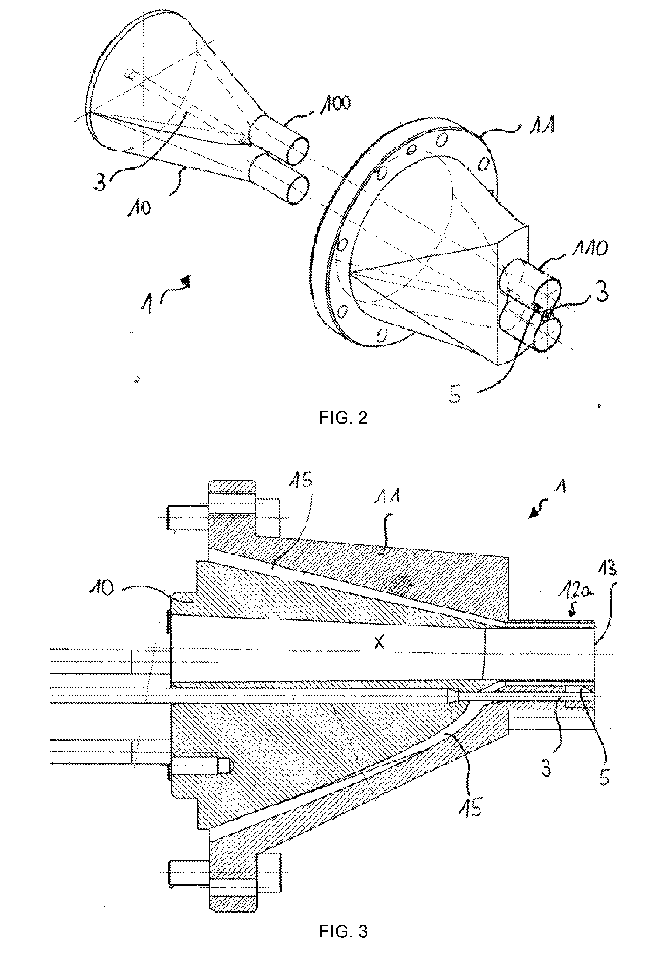

En référence à la figure 2, la tête d'extrusion 1 comprend un épi 10 et un embout 11 concentriques.

Chaque filière est définie intérieurement par la paroi externe d'un premier cylindre 100 saillant de l'épi 10, et est définie extérieurement par la paroi interne d'un deuxième cylindre 110 saillant de l'embout 11 et emboîté de manière concentrique sur le premier cylindre 100.

Comme illustré à la figure 3, l'embout 11 est emboîté sur l'épi 10 en ménageant un jeu entre l'épi et l'embout, de manière à constituer un canal 15 d'alimentation en matériau fondu pour chacune des filières.

Sur l'extrudeuse, les deux filières sont de préférence superposées et présentent un plan commun de symétrie vertical.

Par ailleurs, les deux filières sont séparées par un intervalle.

Dans cet intervalle est usiné un alésage 3 longitudinal qui traverse le corps principal 2 de part en part depuis sa face arrière 21 jusqu'à la face avant 13 des filières 12a et 12b, c'est-à-dire le plan de sortie des paraisons.

Par ailleurs un passage 5 est ménagé, entre l'alésage 3 et chacune des filières 12a et 12b, à proximité de la face avant de celles-ci, de manière à faire communiquer les canaux d'alimentation en matériau fondu des deux filières.

De manière préférée, le passage 5 se présente sous la forme d'une fente longitudinale.

Ainsi, lorsque ce passage 5 est ouvert, il se produit une fuite de matériau dans l'intervalle entre les deux paraisons, formant ainsi un lien entre les deux tubes.

En revanche, lorsque le passage 5 est obturé, il n'y a aucune communication de matériau entre les deux filières, et les deux paraisons sortent indépendamment l'une de l'autre.

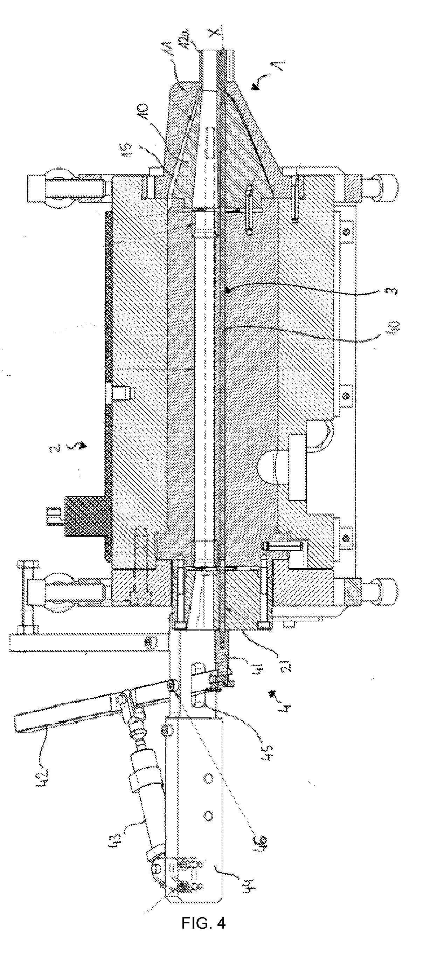

En référence à la figure 4, des moyens 4 d'obturation sont prévus pour pouvoir ouvrir ou obturer le passage 5 afin de générer ou non cette fuite de matériau et former ou non un lien entre les tubes.

A cet effet, les moyens 4 d'obturation comprennent une tige 40 de section circulaire, adaptée pour pouvoir coulisser à l'intérieur de l'alésage 3. On préserve donc un léger jeu entre la tige 40 et l'alésage 3.

On définit pour la tige d'obturation 40 une extrémité avant qui est l'extrémité située du côté de la face avant 13 des filières 12a et 12b.

Dans sa partie arrière, la tige 40 est rigidement liée, par exemple par vissage, à une tête 41 située, à l'extérieur du corps principal 2, dans le prolongement de la tige 40.

Outre la tige 40 et la tête 41, les moyens 4 d'obturation comprennent une tringle 42 solidaire de la tête 41 et un vérin 43 dont une extrémité est reliée à la tringle 42.

Le vérin 43 est solidaire à son autre extrémité d'un support 44 rigidement lié au corps principal 2.

Par ailleurs, la tringle 42 est insérée dans une lumière oblongue 45 du support 44, sensiblement parallèle à la direction X d'extrusion, et est articulée autour d'un axe 46 situé sensiblement au centre de la lumière 45.

L'actionnement du vérin 43 a pour effet de faire pivoter la tringle 42 autour de l'axe 46, ce qui entraîne un déplacement de la tige 40 dans l'alésage 3.

Lorsque la tige 40 est dans une première position dite avancée, elle obture le passage 5 : les deux paraisons sortent indépendamment l'une de l'autre de chacune des filières 12a et 12b et les deux tubes obtenus ne sont pas liés.

Lorsque la tige 40 est dans une deuxième position dite reculée, elle libère le passage 5 et permet le passage d'une fuite de matériau entre les deux paraisons, créant ainsi un lien entre les deux tubes.

La longueur de ce lien est proportionnelle à la durée pendant laquelle la tige est en position reculée.

La commande du vérin 43 permet donc de régler la longueur et l'écartement des liens.

On peut ainsi créer une pluralité de liens entre les deux tubes, ce qui permet de conserver la cohésion de ceux-ci et autorise leur enroulement simultané.

En raison de leur faible épaisseur, les liens sont sécables, ce qui permet de séparer facilement les tubes lorsque cela est nécessaire.

Enfin, on peut disposer en sortie de l'extrudeuse une chaîne de moulage pour former des gaines annelées.

## Revendications

1. Dispositif de fabrication simultanée de deux tubes en matériau synthétique, comprenant deux filières (12a, 12b) d'extrusion pour former deux paraisons parallèles, **caractérisé en ce qu'**il comprend des moyens pour former un lien discontinu dans ledit matériau entre les deux paraisons, lesdits moyens comprenant un passage (5) apte à mettre en liaison fluidique les deux filières (12a, 12b) et une tige d'obturation (40) mobile en translation dans un alésage (3) selon la direction (X) d'extrusion et apte à fermer ou ouvrir ledit passage (5).

2. Dispositif selon la revendication 1, **caractérisé en ce que** ledit passage (5) est une fente longitudinale rectangulaire reliant l'alésage (3) dans lequel coulisse la tige (40) et chacune des deux filières (12a, 12b).

3. Dispositif selon l'une des revendications 1 ou 2, **caractérisé en ce que** ladite tige (40) d'obturation est actionnée par un vérin (43).

4. Procédé de fabrication simultanée de deux tubes en matériau synthétique, par extrusion dans deux filières (12a, 12b) de deux paraisons parallèles, **caractérisé en ce qu'**il comprend, à des instants déterminés, la génération d'une fuite de matériau entre les deux paraisons et **en ce qu'**il comprend l'actionnement, dans le dispositif d'extrusion, d'une tige d'obturation (40) mobile en translation selon la direction (X) d'extrusion, de sorte que :
- dans une première position, ladite tige (40) obture un passage (5) de mise en communication fluidique des deux filières (12a, 12b),
- dans une deuxième position, ladite tige (40) libère ledit passage (5), permettant ainsi ladite fuite de matériau.

5. Procédé selon la revendication 4, **caractérisé en ce que** l'actionnement de la tige (40) est effectué au moyen d'un vérin (43).
